# EUROPEAN PATENT APPLICATION

(11) **EP 4 815 092 A1**
(43) Date of publication of application: **30.09.2026**
(21) Application number: 24933003.6
(22) Date of filing: 15.08.2024
(51) Int. Cl.: H01M 10/058, H01M 10/0525, H01M 50/59, H01M 50/586

(54) **BATTERY CELL, BATTERY AND ELECTRICAL DEVICE**

(30) Priority: 27.03.2024 CN 202410361394
(71) Applicant: Contemporary Amperex Technology Co., Limited, Ningde, Fujian 352100 (CN)
(72) Inventor: LIN, Denghua, Ningde, Fujian 352100 (CN); YANG, Xiao, Ningde, Fujian 352100 (CN); LUO, Yan, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2024/112410
(87) International publication number: WO 2025/200239

(57) **Abstract**

Disclosed in an embodiment of the present application are a battery cell, a battery, and an electrical device. The battery cell comprises an electrode assembly and an insulating part for wrapping at least part of the electrode assembly, wherein the insulating part comprises a first insulating structure and a second insulating structure, the first insulating structure being of a hollow structure with an opening at an end, the hollow structure being used for accommodating the electrode assembly, and the second insulating structure being configured to cover the opening of the first insulating structure. By means of the battery cell, the battery and the electrical device of the embodiment of the present application, the reliability of the battery cell can be improved.

## Description

### CROSS-REFERENCE TO RELATED APPLICATION

The present application claims priority to Chinese Patent Application No. 202410361394.7, filed on March 27, 2024 and entitled "BATTERY CELL, BATTERY, AND ELECTRIC DEVICE", the content of which is incorporated herein by reference in its entirety.

### TECHNICAL FIELD

The present application relates to the field of batteries, and in particular, to a battery cell, a battery, and an electric device.

### BACKGROUND

Energy conservation and emission reduction are the key to the sustainable development of the automobile industry. In this case, electric vehicles have become an important part of the sustainable development of the automobile industry due to their energy conservation and environmental protection advantages. For electric vehicles, the battery technology is an important factor in their development. In the rapid development of battery technology, how to improve the safety performance of batteries is an urgent technical problem to be solved in the battery technology.

### SUMMARY

Embodiments of the present application provide a battery cell, a battery, and an electric device, which can improve the reliability of the battery cell.

In a first aspect, a battery cell is provided. The battery cell includes: an electrode assembly; and an insulating component, where the insulating component is configured to wrap at least a partial region of the electrode assembly; the insulating component includes a first insulating structure and a second insulating structure, the first insulating structure is a hollow structure with one end open, the hollow structure being configured to accommodate the electrode assembly, and the second insulating structure is configured to cover an opening of the first insulating structure.

Therefore, according to the battery cell provided in the embodiments of the present application, by configuring the insulating component to include the first insulating structure and the second insulating structure, at least a partial region of each end surface of the electrode assembly may be wrapped; that is, each end surface of the electrode assembly is provided with the insulating component, which can improve the insulation reliability between each end surface of the electrode assembly and a shell of the battery cell, and reduce the risk of short circuit and insulation failure between the electrode assembly and the shell.

In some embodiments, the electrode assembly is provided with a tab, and the insulating component is configured to wrap regions of the electrode assembly other than the tab. In one aspect, the impact of the insulating component on the tab during the mounting process can be reduced; for example, the damage to the tab can be reduced, thereby reducing the risk of cracking of the tab. In another aspect, considering that the tab is configured to be electrically connected to an electrode terminal, the impact of the insulating component on the electrical connection between the tab and the electrode terminal can also be reduced, the connection efficiency between the tab and the electrode terminal is improved, and thereby the performance of the battery cell is improved.

In some embodiments, the tab is disposed on a first end surface of the electrode assembly, the first insulating structure is configured to wrap regions of the electrode assembly other than the first end surface, and the second insulating structure is configured to wrap at least a partial region of the first end surface other than the tab, such that the structure is simple and easy to implement.

In some embodiments, the first end surface is provided with two tabs, and the second insulating structure is located between the two tabs. Providing the second insulating structure between the two tabs, especially in the case that the distance between the two tabs of the first end surface is large, can not only simplify the structure of the second insulating structure to facilitate processing and assembly, but also achieve insulation between the two tabs and the shell of the battery cell to reduce the risk of insulation failure.

In some embodiments, the tab is disposed on the first end surface of the electrode assembly, the second insulating structure is configured to wrap a second end surface of the electrode assembly, and the first end surface is different from the second end surface. Providing the second insulating structure on other end surfaces of the electrode assembly, other than the first end surface where the tab is located, can improve the design flexibility of the insulating component, thereby facilitating the application to different battery cells.

In some embodiments, the first end surface and the second end surface are disposed opposite to each other, and the opening of the first insulating structure and the first end surface where the tab is located are disposed opposite to each other, thereby facilitating sleeving the first insulating structure on the exterior of the electrode assembly.

In some embodiments, the first insulating structure is provided with a clearance opening, and the clearance opening is configured to provide clearance for the tab, such that the structure is simple and easy to implement.

In some embodiments, the second insulating structure includes a first region and two second regions. The first region is located between the two second regions. The first region is configured to cover at least a partial region of the opening of the first insulating structure, and the two second regions overlap with side walls of the first insulating structure that are disposed opposite to each other, respectively. By bending the second insulating structure, the second regions of the second insulating structure overlap with the side walls of the first insulating structure, such that the first insulating structure and the second insulating structure can be fixedly connected. This makes the structure simple and stable and can reduce the risk of insulation failure at the junction between the first insulating structure and the second insulating structure.

In some embodiments, a dimension of each second region of the two second regions in a thickness direction of the first region is greater than or equal to 0.5 mm, so as to reduce the risk of local warping caused by an excessively small area of an overlapping portion, thereby reducing the risk of insulation failure caused by local gaps in the insulating component.

In some embodiments, the battery cell includes: a shell body, the shell body being of a hollow structure with an opening, and the electrode assembly wrapped with the insulating component being accommodated in the shell body; and a cover plate, the cover plate being configured to cover the opening of the shell body to isolate the external environment.

In some embodiments, the shell body is provided with a recess that is recessed toward an interior of the battery cell, a third region of the insulating component is located between the recess and the electrode assembly, and an orthographic projection of a bottom wall of the recess onto the third region is located within the third region, so as to reduce the risk of insulation failure between the bottom wall of the recess and the electrode assembly and improve the reliability.

In some embodiments, the first end surface of the electrode assembly is provided with two tabs, and the recess is located between the two tabs, such that the shell body provided with the recess can be better adapted to the shape of the electrode assembly, thereby reducing unnecessary space inside the battery cell, improving the space utilization rate inside the battery cell, and meanwhile, improving the space utilization rate inside the case.

In some embodiments, the cover plate includes a wall with a largest area of the battery cell, so as to facilitate the entry of the electrode assembly into the shell body via the opening of the shell body, thereby increasing the mounting speed of the battery cell.

In some embodiments, a value range of a thickness of the first insulating structure is [0.03 mm, 0.3 mm]; and/or a value range of a thickness of the second insulating structure is [0.03 mm, 0.3 mm]. The thickness of the first insulating structure and the thickness of the second insulating structure should not be set too large, so as to reduce the space occupied by the insulating component. Conversely, the thickness of the first insulating structure and the thickness of the second insulating structure should not be set too small, so as to meet the insulation requirement and reduce the risk of local insulation failure.

In some embodiments, the second insulating structure is an adhesive tape, such that the structure is simple and stable, and easy to implement.

In a second aspect, a battery is provided. The battery includes a plurality of battery cells, and the battery cell is the battery cell according to the first aspect or according to any one of the embodiments of the first aspect.

In a third aspect, an electric device is provided. The electric device includes a battery. The battery includes a plurality of battery cells, and the battery cell is the battery cell according to the first aspect or according to any one of the embodiments of the first aspect. The battery is configured to supply power to the electric device.

In some embodiments, the electric device is a vehicle, a ship, or a spacecraft.

### BRIEF DESCRIPTION OF THE DRAWINGS

FIG. 1 is a schematic diagram of a vehicle according to one embodiment of the present application;
FIG. 2 is a schematic diagram of an exploded structure of a battery according to one embodiment of the present application;
FIG. 3 is a schematic structural diagram of a battery cell according to one embodiment of the present application;
FIG. 4 is a schematic diagram of an exploded structure of a battery cell according to one embodiment of the present application;
FIG. 5 is a schematic structural diagram of an electrode assembly and an insulating component according to one embodiment of the present application;
FIG. 6 is a schematic diagram of an exploded structure of an insulating component according to one embodiment of the present application;
FIG. 7 is a schematic structural diagram of an electrode assembly and an insulating component according to another embodiment of the present application;
FIG. 8 is a schematic diagram of an exploded structure of an insulating component according to another embodiment of the present application;
FIG. 9 is a schematic side view of an electrode assembly and an insulating component according to one embodiment of the present application;
FIG. 10 is a schematic cross-sectional view of a battery cell according to one embodiment of the present application;
FIG. 11 is a partially enlarged view of a schematic cross-sectional view of a battery cell according to one embodiment of the present application;
FIG. 12 is another schematic cross-sectional view of a battery cell according to one embodiment of the present application; and
FIG. 13 is a partially enlarged view of another schematic cross-sectional view of a battery cell according to one embodiment of the present application.

The drawings are not drawn to scale.

### DETAILED DESCRIPTION

The technical solutions in embodiments of the present application will be described below with reference to the drawings.

To make the objectives, technical solutions, and advantages of the embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the described embodiments of the present application can be combined with other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood based on specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are only exemplary and should not be construed as limiting the present application in any way.

The term "plurality of" used in the present application refers to two or more (including two). Similarly, "plurality of groups" refers to two or more (including two) groups, and "plurality of pieces" refers to two or more (including two) pieces.

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

In some implementations, the battery cell in the embodiments of the present application may be a metal battery. Specifically, the metal battery may include a lithium metal secondary battery, a sodium metal battery, a magnesium metal battery, and the like. This is not limited in the embodiments of the present application.

The battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector is provided with two surfaces opposite to each other in its own thickness direction, and the positive electrode active material is disposed on either or both of the two opposite surfaces of the positive electrode current collector.

As an example, a metal foil, a foam metal, or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in a combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, the negative electrode may be a negative electrode plate, and the negative electrode plate may include a negative electrode current collector and a negative electrode active material disposed on at least one surface of the negative electrode current collector.

As an example, the negative electrode current collector is provided with two surfaces opposite to each other in its own thickness direction, and the negative electrode active material is disposed on either or both of the two opposite surfaces of the negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The foam metal may be foam nickel, foam copper, foam aluminum, foam alloy, foam carbon, or the like. The composite current collector may be formed by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like.

In some embodiments, the electrode assembly further includes a separator. The separator is disposed between the positive electrode and the negative electrode.

In some embodiments, the separator is a separation film. The present application does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene fluoride, and ceramic.

In some embodiments, the separator is a solid-state electrolyte. The solid-state electrolyte is disposed between the positive electrode and the negative electrode, serving both to transport ions and to isolate the positive electrode from the negative electrode.

In some embodiments, the battery cell further includes an electrolyte that serves to conduct ions between the positive electrode and the negative electrode. The present application does not specifically limit the type of the electrolyte, which may be selected based on requirements. The electrolyte may be liquid-state, gel-state, or solid-state.

In some embodiments, the electrode assembly is of a wound structure. The positive electrode plate and the negative electrode plate are wound to form a wound structure.

In some embodiments, the electrode assembly is of a stacked structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, a plurality of separators may be provided and are separately disposed between any adjacent positive electrode plates or negative electrode plates.

As an example, the separators may be provided continuously and are disposed between any adjacent positive electrode plates or negative electrode plates by means of folding or winding.

In some embodiments, the shape of the electrode assembly may be cylindrical, flat, polygonal prismatic, or the like.

In some embodiments, the electrode assembly is provided with tabs that can conduct current out from the electrode assembly. The tabs include a positive electrode tab and a negative electrode tab.

In some embodiments, the battery cell may include a shell. The shell is configured to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like. The shell includes a shell body and a cover plate.

As an example, the battery cell may be a cylindrical battery cell, a prismatic battery cell, a pouch battery cell, or a battery cell of other shapes. The prismatic battery cell includes a square-shell battery cell, a blade-shaped battery cell, and a polygonal prismatic battery, and the polygonal prismatic battery is, for example, a hexagonal prismatic battery. This is not particularly limited in the present application.

The battery mentioned in the embodiments of the present application may include one or more battery cells to provide a single physical module with a higher voltage and capacity. When a plurality of battery cells are provided, the plurality of battery cells are connected in series, in parallel, or in series-parallel by a busbar component.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of a crossbeam and a longitudinal beam of the vehicle.

Battery technology advancement requires consideration of various design factors at the same time, such as energy density, cycle life, discharge capacity, charging and discharging rate, and other performance parameters. In addition, the safety and processing efficiency of the battery also need to be considered. To avoid a short circuit between the electrode assembly inside the battery cell and the shell, an insulating material may be wrapped around the exterior of the electrode assembly. For example, to improve the processing efficiency, an insulating material is generally wrapped around a partial region of an outer surface of the electrode assembly. Taking a rectangular parallelepiped electrode assembly as an example, an insulating material may be wrapped around a partial surface of the electrode assembly to reduce the risk of a short circuit between the partial surface and the shell, while surfaces not wrapped with the insulating material may be used for providing components such as tabs. However, different types of battery cells have different structures. For example, to improve the energy density or space utilization rate of the battery cell inside the battery, a part of the battery cell may be provided with a recess that is recessed toward the interior, and the distance between the recess and the electrode assembly is small. If the region covered by the insulating material on the surface of the electrode assembly is insufficient, a short circuit may occur between a part of the electrode assembly and the shell, resulting in insulation failure.

Therefore, the embodiments of the present application provide a battery cell, a battery, and an electric device, which can solve the problems described above. The battery cell according to the embodiments of the present application includes an electrode assembly and an insulating component. The insulating component wraps at least a partial region of the electrode assembly. The insulating component includes a first insulating structure and a second insulating structure. The first insulating structure is a hollow structure with one end open, and the electrode assembly is accommodated inside the hollow structure. The second insulating structure is configured to cover the opening of the first insulating structure. In this way, the insulating component may wrap at least a partial region of each end surface of the electrode assembly; that is, each end surface of the electrode assembly is provided with the insulating component, which can improve the insulation reliability between each end surface of the electrode assembly and the shell, and reduce the risk of short circuit and insulation failure between the electrode assembly and the shell.

For ease of explanation, the following embodiments will be described by taking a vehicle as an example of the electric device.

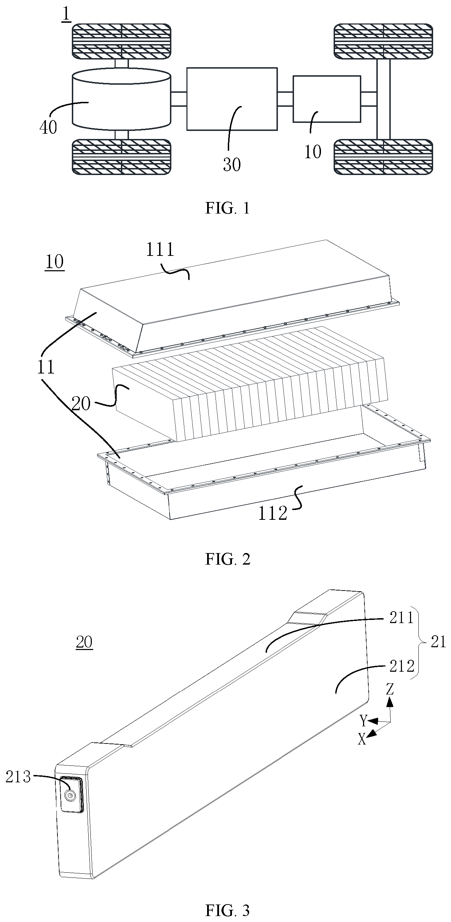

For example, FIG. 1 is a schematic structural diagram of a vehicle 1 according to one embodiment of the present application. The vehicle 1 may be a fuel vehicle, a gas vehicle, or a new energy vehicle. The new energy vehicle may be a pure electric vehicle, a hybrid vehicle, an extended-range vehicle, or the like. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may serve as an operation power source for the vehicle 1 and is configured in a circuit system of the vehicle 1, for example, for the startup and navigation of the vehicle 1 and for the working power demand during operation. In another embodiment of the present application, the battery 10 may not only serve as an operation power source for the vehicle 1, but also serve as a driving power source for the vehicle 1 to, replacing or partially replacing fuel or natural gas, provide driving power for the vehicle 1.

To meet different power usage requirements, the battery may include a plurality of battery cells. The plurality of battery cells may be connected in series, in parallel, or in series-parallel. The series-parallel connection refers to a mixture of series connection and parallel connection. The battery may also be referred to as a battery pack. For example, the plurality of battery cells may be first connected in series, in parallel, or in series-parallel to form a battery module, and then a plurality of battery modules are connected in series, in parallel, or in series-parallel to form a battery. That is, the plurality of battery cells may be directly assembled into a battery, or may be first assembled into battery modules, which are then assembled into a battery.

For example, FIG. 2 shows a schematic structural diagram of a battery 10 according to one embodiment of the present application. The battery 10 may include a plurality of battery cells 20. The battery 10 may further include a case 11, and the interior of the case 11 is of a hollow structure. The plurality of battery cells 20 are accommodated in the case 11. FIG. 2 shows a possible implementation of the case 11 according to the embodiments of the present application. As shown in FIG. 2, the case 11 may include two parts, herein referred to as a first part 111 and a second part 112, and the first part 111 and the second part 112 are snap-fitted together. The shapes of the first part 111 and the second part 112 may be determined based on the shape of the combination of a plurality of battery cells 20, and at least one of the first part 111 and the second part 112 has one opening. For example, as shown in FIG. 2, the first part 111 and the second part 112 may each be a hollow rectangular parallelepiped and each have only one open face. The opening of the first part 111 and the opening of the second part 112 are disposed opposite to each other, and the first part 111 and the second part 112 are snap-fitted together to form the case 11 with an enclosed chamber.

For another example, unlike that shown in FIG. 2, only one of the first part 111 and the second part 112 may be a hollow rectangular parallelepiped with an opening, while the other is plate-shaped so as to cover the opening. For example, in an example where the second part 112 is a hollow rectangular parallelepiped and only one face is the open face, and the first part 111 is plate-shaped, the first part 111 covers the opening of the second part 112 to form the case 11 with an enclosed chamber, which can be used to accommodate a plurality of battery cells 20. The plurality of battery cells 20, after being connected in parallel, in series, or in series-parallel, are disposed inside the case 11 formed after the first part 111 and the second part 112 are snap-fitted together.

In some embodiments, the battery 10 may further include other structures, which are not described in detail herein. For example, the battery 10 may further include a busbar component, and the busbar component is configured to achieve electrical connection among the plurality of battery cells 20, such as in parallel, in series, or in series-parallel connection. Specifically, the busbar component may achieve electrical connection among the battery cells 20 by connecting to electrode terminals of the battery cells 20. Further, the busbar component may be fixed to the electrode terminals of the battery cells 20 by welding. The electric energy of the plurality of battery cells 20 can be further conducted through a conductive mechanism passing through the case 11.

Based on different power requirements, the number of the battery cells 20 in the battery 10 may be set to any numerical value. The plurality of battery cells 20 may be connected in series, in parallel, or in series-parallel to achieve a higher capacity or power. Since each battery 10 may include a large number of the battery cells 20, the battery cells 20 may be arranged in groups for ease of mounting, with each group of the battery cells 20 forming a battery module. The number of the battery cells 20 included in the battery module is not limited and may be set according to requirements. In addition, in order to improve the space occupation of the battery cells 20 in the battery 10, the mounting orientation of the battery cells 20 may be appropriately configured based on the shapes of the plurality of battery cells 20. In addition, the mounting orientations of different battery cells 20 in the battery 10 may be the same or different, which is not limited in the embodiments of the present application.

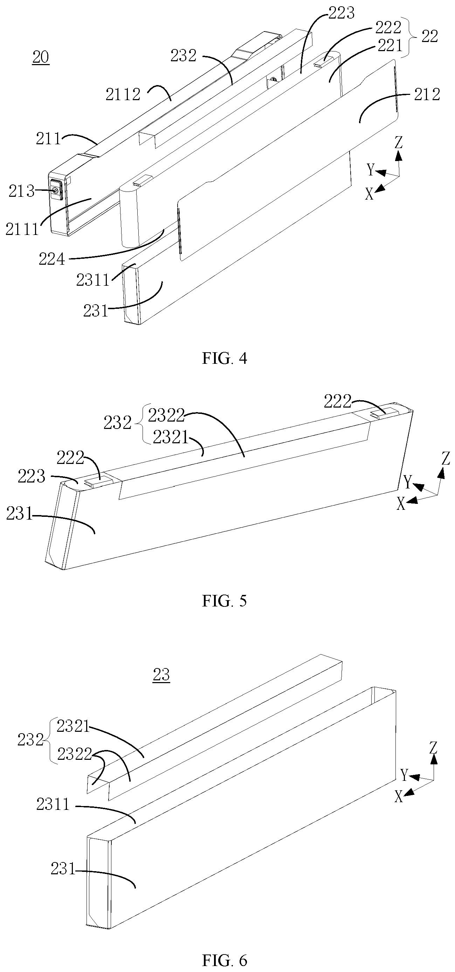

FIG. 3 shows a schematic structural diagram of a battery cell 20 according to the embodiments of the present application. For example, FIG. 3 may be any one of the battery cells 20 included in the battery 10 shown in FIG. 2. FIG. 4 shows a schematic diagram of an exploded structure of a battery cell 20 according to the embodiments of the present application. For example, FIG. 4 may be a possible schematic diagram of an exploded structure of the battery cell 20 shown in FIG. 3.

In the embodiments of the present application, as shown in FIGs. 3 and 4, the battery cell 20 according to the embodiments of the present application includes: an electrode assembly 22 and an insulating component 23. Specifically, the insulating component 23 is configured to wrap at least a partial region of the electrode assembly 22. The insulating component 23 includes a first insulating structure 231 and a second insulating structure 232. The first insulating structure 231 is a hollow structure with one end open, and the hollow structure is configured to accommodate the electrode assembly 22. The second insulating structure 232 is configured to cover an opening 2311 of the first insulating structure 231.

It should be understood that the first insulating structure 231 according to the embodiments of the present application is a hollow structure with one end open, and the electrode assembly 22 is accommodated in the hollow structure, such that the first insulating structure 231 may wrap other end surfaces of the electrode assembly 22, other than an end surface corresponding to the opening 2311 of the first insulating structure 231. That is, each of the other end surfaces of the electrode assembly 22, other than the end surface corresponding to the opening 2311 of the first insulating structure 231, is provided with the first insulating structure 231, and at least a partial region of any one of the end surfaces is covered by the first insulating structure 231.

For example, as shown in FIGs. 3 and 4, the first insulating structure 231 is provided with the opening 2311, and the electrode assembly 22 is correspondingly provided with a first end surface 223. In the case that the electrode assembly 22 is accommodated in the hollow structure inside the first insulating structure 231, that is, in the case that the first insulating structure 231 is wrapped around the exterior of the electrode assembly 22, the first insulating structure 231 can wrap at least a partial region of the end surfaces of the electrode assembly 22 other than the first end surface 223. That is, any one of the end surfaces of the electrode assembly 22 other than the first end surface 223 is provided with the first insulating structure 231, and the first insulating structure 231 may cover the entire region or a partial region of the end surface.

It should be understood that the first insulating structure 231 according to the embodiments of the present application may be an integrated structure, or may be formed by splicing a plurality of portions. For example, as shown in FIGs. 3 and 4, the first insulating structure 231 may be an integrated structure, which is folded to wrap a partial region of the electrode assembly 22. This facilitates processing and can also improve the assembly efficiency of the battery cell 20.

The second insulating structure 232 according to the embodiments of the present application may cover the opening 2311 of the first insulating structure 231, and the second insulating structure 232 may be configured to wrap at least a partial region of the end surface of the electrode assembly 22 corresponding to the opening 2311 of the first insulating structure 231. For example, as shown in FIGs. 3 and 4, the first insulating structure 231 is provided with the opening 2311, and the electrode assembly 22 is correspondingly provided with the first end surface 223. The second insulating structure 232 may be configured to wrap at least a partial region of the first end surface 223; that is, the second insulating structure 232 may cover the entire region or a partial region of the first end surface 223.

In this way, by configuring the insulating component 23 to include the first insulating structure 231 and the second insulating structure 232, at least a partial region of each end surface of the electrode assembly 22 may be wrapped; that is, each end surface of the electrode assembly 22 is provided with the insulating component 23, which can improve the insulation reliability between each end surface of the electrode assembly 22 and a shell 21 of the battery cell 20, and reduce the risk of short circuit and insulation failure between the electrode assembly 22 and the shell 21. In addition, the specific position of the insulating component 23 may also be flexibly configured based on the difference in each end surface of the electrode assembly 22, thereby improving the design flexibility of the structure of the battery cell 20.

It should be understood that the electrode assembly 22 according to the embodiments of the present application is a component in the battery cell 20 where electrochemical reactions occur, and one or more electrode assemblies 22 may be provided in the battery cell 20 based on actual use requirements. The shape of the electrode assembly 22 may be configured based on practical applications. For example, the electrode assembly 22 may be a cylinder, a rectangular parallelepiped, or the like. In addition, the shape of the exterior of the battery cell 20 may be the same as or different from the shape of the electrode assembly 22. For example, if the electrode assembly 22 is of a cylindrical structure, the shell 21 of the battery cell 20 may also be of a cylindrical structure or a rectangular parallelepiped structure. If the electrode assembly 22 is of a rectangular parallelepiped structure, the shell 21 may generally also be of a rectangular parallelepiped structure. However, the embodiments of the present application are not limited thereto. For ease of explanation, as shown in FIGs. 3 and 4, the embodiments of the present application are mainly described by taking a rectangular parallelepiped electrode assembly 22 as an example.

For any electrode assembly 22, the electrode assembly 22 may include a tab 222 and an electrode plate main body part 221. Specifically, as shown in FIGs. 3 to 4, the electrode assembly 22 may include at least two tabs 222. The at least two tabs 222 may include at least one positive electrode tab and at least one negative electrode tab. The positive electrode tab may be formed by stacking portions of the positive electrode plate that are not coated with a positive electrode active substance layer, and the electrode plate main body part 221 may be formed by winding or stacking portions of the positive electrode plate that are coated with the positive electrode active substance layer. The negative electrode tab may be formed by stacking portions of the negative electrode plate that are not coated with a negative electrode active substance layer, and the electrode plate main body part 221 may be formed by winding or stacking portions of the negative electrode plate that are coated with the negative electrode active substance layer.

The plurality of tabs 222 of the electrode assembly 22 according to the embodiments of the present application may be located on the same end surface or different end surfaces of the electrode assembly 22. For example, the electrode assembly 22 may include two tabs 222, and the two tabs 222 may be located on the same end surface, or the two tabs 222 may be disposed on different end surfaces. For example, the two tabs 222 may be located on end surfaces disposed opposite to each other. The embodiments of the present application are not limited thereto. For ease of explanation, as shown in FIGs. 3 and 4, the embodiments of the present application are mainly described by taking an example where the electrode assembly 22 includes two tabs 222 and the two tabs 222 are both disposed on the first end surface 223 of the electrode assembly 22.

In some embodiments, the shell 21 of the battery cell 20 according to the embodiments of the present application may be further provided with an electrode terminal 213 thereon. The electrode terminal 213 is configured to be electrically connected to the electrode assembly 22 to output the electric energy of the battery cell 20. As shown in FIGs. 3 to 4, the battery cell 20 may include at least two electrode terminals 213. The at least two electrode terminals 213 include at least one positive electrode terminal and at least one negative electrode terminal. Each electrode terminal 213 is configured to be electrically connected to a corresponding tab 222. For example, each electrode terminal 213 may be electrically connected to a corresponding tab 222 via a connecting member. For example, the positive electrode tab of the electrode assembly 22 may be connected to the positive electrode terminal via one connecting member, and the negative electrode tab of the electrode assembly 22 may be connected to the negative electrode terminal via another connecting member.

The at least two electrode terminals 213 of the battery cell 20 may be disposed on the same wall or different walls of the battery cell 20. For example, the position of the electrode terminal 213 may be configured based on the position of the tab 222 of the electrode assembly 22. For example, as shown in FIGs. 3 to 4, the embodiments of the present application are mainly described by taking an example where the battery cell 20 includes two electrode terminals 213 and the two electrode terminals 213 are disposed on two opposite walls of the shell 21 of the battery cell 20.

In the embodiments of the present application, the electrode assembly 22 is provided with the tab 222, and the insulating component 23 is configured to wrap regions of the electrode assembly 22 other than the tab 222; that is, the insulating component 23 is not configured to wrap the region where the tab 222 is located. Providing the insulating component 23 in the regions other than the tab 222, in one aspect, can reduce the impact of the insulating component 23 on the tab during the mounting process, for example, can reduce the damage to the tab 222, thereby reducing the risk of cracking of the tab 222. In another aspect, considering that the tab 222 is configured to be electrically connected to the electrode terminal 213, the impact of the insulating component 23 on the electrical connection between the tab 222 and the electrode terminal 213 can also be reduced, the connection efficiency between the tab 222 and the electrode terminal 213 is improved, and thereby the performance of the battery cell 20 is improved.

It should be understood that in the embodiments of the present application, the insulating component 23 not wrapping the region where the tab 222 is located includes: the insulating component 23 not wrapping the tab 222 and adjacent regions around the tab 222. That is, the insulating component 23 is not provided on the tab 222 and within a certain distance near the tab 222, so as to reduce the impact of the insulating component 23 on the tab 222.

The insulating component 23 is wrapped around the exterior of the electrode assembly 22 according to the embodiments of the present application. The insulating component 23 may be implemented in various ways. FIG. 5 shows a schematic structural diagram of an electrode assembly 22 and an insulating component 23 according to the embodiments of the present application. For example, the electrode assembly 22 and the insulating component 23 shown in FIG. 5 may be a part of the battery cell 20 shown in FIGs. 3 and 4. FIG. 6 shows a schematic diagram of an exploded structure of an insulating component 23 according to the embodiments of the present application. For example, the insulating component 23 shown in FIG. 6 may be the insulating component 23 included in the battery cell 20 shown in FIGs. 3 to 4; that is, the insulating component 23 shown in FIG. 6 may be the exploded structure of the insulating component 23 shown in FIG. 5.

In some embodiments, as shown in FIGs. 5 and 6, the tabs 222 are disposed on the first end surface 223 of the electrode assembly 22, the first insulating structure 231 is configured to wrap regions of the electrode assembly 22 other than the first end surface 223, and the second insulating structure 232 is configured to wrap at least a partial region of the first end surface 223 other than the tabs 222. The tabs 222 of the electrode assembly 22 are disposed on the first end surface 223, and the first insulating structure 231 is provided with the opening 2311 at an end corresponding to the first end surface 223, which can facilitate wrapping the first insulating structure 231 around the exterior of the electrode assembly 22. Especially in the case that all the tabs 222 of the electrode assembly 22 are disposed on the first end surface 223, other end surfaces are relatively flat, which facilitates wrapping the first insulating structure 231 around the exterior of other end surfaces. Then, the second insulating structure 232 wraps at least a partial region of the first end surface 223 other than the tabs 222, such that the structure is simple and easy to implement.

In some embodiments, the first end surface 223 is provided with two tabs 222, and the second insulating structure 232 is located between the two tabs 222. As shown in FIGs. 5 and 6, in the case that the first end surface 223 is provided with two tabs 222, the distance between the two tabs 222 is usually large, so as to reduce the mutual influence between the two tabs 222. Therefore, providing the second insulating structure 232 between the two tabs 222, especially in the case that the distance between the two tabs 222 of the first end surface 223 is large, can not only simplify the structure of the second insulating structure 232 to facilitate processing and assembly, but also achieve insulation between the two tabs 222 and the shell 21 of the battery cell 20 to reduce the risk of insulation failure.

Alternatively, unlike the embodiments shown in FIGs. 5 and 6, the second insulating structure 232 may be further provided with a clearance region, and the clearance region provides clearance for the region where the tab 222 is located. For example, the clearance region may be a through hole, and the tab 222 passes through the through hole of the second insulating structure 232, such that the second insulating structure 232 can be disposed in the region between two tabs 222 of the first end surface 223. In addition, the second insulating structure 232 may also be disposed in the region outside the two tabs 222, so as to improve the reliability between the first end surface 223 and the shell 21 and further reduce the risk of insulation failure.

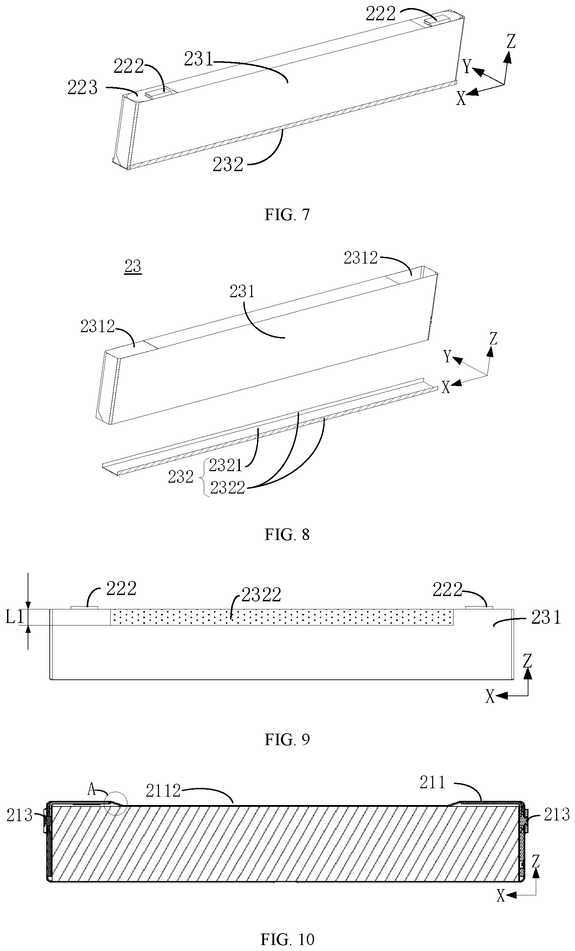

It should be understood that the second insulating structure 232 according to the embodiments of the present application may also be disposed at other positions. FIG. 7 shows a schematic structural diagram of an electrode assembly 22 and an insulating component 23 according to another embodiment of the present application. For example, the electrode assembly 22 and the insulating component 23 shown in FIG. 7 may replace the electrode assembly 22 and the insulating component 23 in the battery cell 20 shown in FIGs. 3 and 4. FIG. 8 shows a schematic diagram of an exploded structure of an insulating component 23 according to another embodiment of the present application. For example, the insulating component 23 shown in FIG. 8 may be the exploded structure of the insulating component 23 shown in FIG. 7.

In some embodiments, the tab 222 is disposed on the first end surface 223 of the electrode assembly 22, the second insulating structure 232 is configured to wrap a second end surface 224 of the electrode assembly 22, and the first end surface 223 is different from the second end surface 224. Providing the second insulating structure 232 on other end surfaces of the electrode assembly 22, other than the first end surface 223 where the tab 222 is located, can improve the design flexibility of the insulating component 23, thereby facilitating the application to different battery cells 20.

In the embodiments of the present application, the first end surface 223 and the second end surface 224 may be any two different end surfaces of the electrode assembly 22. For example, as shown in FIGs. 6 and 7, the first end surface 223 and the second end surface 224 are disposed opposite to each other, and the opening 2311 of the first insulating structure 231 and the first end surface 223 where the tab 222 is located are disposed opposite to each other, thereby facilitating sleeving the first insulating structure 231 on the exterior of the electrode assembly 22.

In some embodiments, the first insulating structure 231 is provided with a clearance opening 2312, and the clearance opening 2312 is configured to provide clearance for the tab 222, such that the structure is simple and easy to implement. For example, the first end surface 223 may be provided with a plurality of tabs 222, and the first insulating structure 231 may be correspondingly provided with a plurality of clearance openings 2312 that are in one-to-one correspondence with the plurality of tabs 222, so as to provide clearance for the region where each tab 222 is located and reduce the impact on the tab 222.

It should be understood that the first insulating structure 231 and the second insulating structure 232 according to the embodiments of the present application may be connected and fixed in different ways. For example, FIG. 9 shows a schematic side view of an electrode assembly 22 and an insulating component 23 according to the embodiments of the present application. For example, the electrode assembly 22 and the insulating component 23 shown in FIG. 9 may be a part of the battery cell 20 shown in FIGs. 3 and 4, and the side surface shown in FIG. 9 is perpendicular to the thickness direction Y of the battery cell 20. The following description is provided mainly by taking the embodiment shown in FIG. 9 as an example. However, related descriptions are also applicable to other embodiments, for example, may also be applicable to the embodiments shown in FIGs. 7 and 8.

In the embodiments of the present application, the second insulating structure 232 includes a first region 2321 and two second regions 2322. The first region 2321 is located between the two second regions 2322. The first region 2321 is configured to cover at least a partial region of the opening 2311 of the first insulating structure 231, and the two second regions 2322 overlap with side walls of the first insulating structure 231 that are disposed opposite to each other, respectively. As shown in FIGs. 5 to 9, by bending the second insulating structure 232, the second regions 2322 of the second insulating structure 232 overlap with the side walls of the first insulating structure 231, such that the first insulating structure 231 and the second insulating structure 232 can be fixedly connected. This makes the structure simple and stable and can reduce the risk of insulation failure at the junction between the first insulating structure 231 and the second insulating structure 232.

In some embodiments, the side wall of the first insulating structure 231 that overlaps with the second region 2322 may be a wall with the largest area of the first insulating structure 231; that is, the overlapping portion of the first insulating structure 231 and the second insulating structure 232 corresponds to the wall with the largest area of the battery cell 20, so as to increase the area of the overlapping region between the first insulating structure 231 and the second insulating structure 232, thereby improving the connection strength and stability between the first insulating structure 231 and the second insulating structure 232. For example, the two side walls of the first insulating structure 231 that overlap with the two second regions 2322 may be two walls with an equal area, and the two side walls are both walls with the largest area.

In some embodiments, the second insulating structure 232 may be an adhesive tape, and the second region 2322 bent relative to the first region 2321 may be directly adhered to an outer surface of the first insulating structure 231, so as to achieve the fixed connection between the first insulating structure 231 and the second insulating structure 232, such that the structure is simple and stable, and easy to implement. Alternatively, a binder may also be applied between the second region 2322 and the outer surface of the first insulating structure 231 to fixedly connect the first insulating structure 231 and the second insulating structure 232. The embodiments of the present application are not limited thereto.

In some embodiments, the dimension of each second region 2322 of the two second regions 2322 in the thickness direction Z of the first region 2321 may be configured based on practical applications. An example where the thickness direction Z of the first region 2321 is the height direction Z of the battery cell 20 is used. For example, the dimension of each second region 2322 of the two second regions 2322 in the thickness direction Z of the first region 2321 is greater than or equal to 0.5 mm, so as to reduce the risk of local warping caused by an excessively small area of the overlapping portion, thereby reducing the risk of insulation failure caused by local gaps in the insulating component 23. Conversely, the dimension of each second region 2322 in the thickness direction Z of the first region 2321 should not be set too large, thereby limiting the area of the overlapping region to save costs, and reducing the weight of the insulating component 23 and the space occupied by the insulating component.

It should be understood that the arrangement of the insulating component 23 according to the embodiments of the present application may also consider the arrangement of the shell 21 of the battery cell 20. Specifically, the battery cell 20 according to the embodiments of the present application may further include a shell 21. The interior of the shell 21 is configured to accommodate the electrode assembly 22. The shell 21 may be of a hollow polyhedral structure, and the hollow structure may be configured to accommodate the electrode assembly 22. The shape of the battery cell 20 may be flexibly configured based on practical applications. That is, the battery cell 20 may be of any polyhedral structure, for example, may be configured as a rectangular parallelepiped, a cylinder, or the like. Specifically, the shell 21 of the battery cell 20 may include a plurality of walls to enable the battery cell 20 to be of a polyhedral structure. Illustratively, the shell 21 may be a rectangular parallelepiped or an approximately rectangular parallelepiped. The shell 21 may include six walls, and each wall is rectangular. As shown in FIGs. 3 to 9, the embodiments of the present application are mainly described by taking an example where the shell 21 is of an approximately rectangular parallelepiped structure. The shell 21 may include six walls. One or more of the six walls may be approximately rectangular. For example, the contour of the wall is generally rectangular, but partial regions thereof are recessed or raised. However, the embodiments of the present application are not limited thereto.

Specifically, for a rectangular battery cell 20, for ease of description, three reference directions are defined in the embodiments of the present application. The thickness direction of the battery cell 20 is direction Y, the height direction of the battery cell 20 is direction Z, and the length direction of the battery cell 20 is direction X. The thickness direction Y, the height direction Z, and the length direction X of the battery cell 20 are perpendicular to each other, and the dimension of the battery cell 20 in the thickness direction Y is less than the dimension thereof in the length direction X.

In the embodiments of the present application, the battery cell 20 may further include a shell body 211 and a cover plate 212. For example, the shell 21 may include a shell body 211 and a cover plate 212. Specifically, the shell body 211 is of a hollow structure with an opening 2111, and the electrode assembly 22 wrapped with the insulating component 23 is accommodated in the shell body 211. The cover plate 212 is configured to cover the opening 2111 of the shell body 211 to isolate the external environment.

In some embodiments, the shell body 211 may be of a hollow structure with at least one end formed with an opening 2111; the shape of the cover plate 212 may be adapted to the shape of the shell body 211, and the cover plate 212 is configured to cover the opening 2111 of the shell body 211, such that the shell 21 isolates the internal environment of the battery cell 20 from the external environment. If the shell body 211 is of a hollow structure with one end formed with an opening 2111, one cover plate 212 may be provided, as shown in FIGs. 3 to 9. Alternatively, in contrast to the above configuration, if the shell body 211 is of a hollow structure with two opposite ends formed with openings 2111, two cover plates 212 may be provided, and the two cover plates 212 cover the openings 2111 at the two ends of the shell body 211, respectively. The embodiments of the present application are not limited thereto.

The shell body 211 according to the embodiments of the present application may be made of various materials, such as copper, iron, aluminum, steel, and aluminum alloy. The cover plate 212 may also be made of various materials, such as copper, iron, aluminum, steel, and aluminum alloy. The material of the cover plate 212 may be the same as or different from the material of the shell body 211.

The shapes of the shell body 211 and the cover plate 212 according to the embodiments of the present application fit each other. For example, as shown in FIGs. 3 to 9, the shell body 211 may be of an approximately rectangular parallelepiped structure, and the cover plate 212 is of an approximately rectangular plate-shaped structure adapted to the shell body 211. The cover plate 212 may be any one of the walls of the shell 21. For example, the cover plate 212 may be a wall with the largest area or a wall with the smallest area among the plurality of walls included in the shell 21, or may be other walls. The embodiments of the present application are not limited thereto. Alternatively, the cover plate 212 may also be of other structures. For example, the cover plate 212 may also be of a groove structure with an opening, such that the opening of the cover plate 212 covers the opening 2111 of the shell body 211. The embodiments of the present application are not limited thereto.

In some embodiments, the cover plate 212 includes the wall with the largest area of the battery cell; that is, the end surface where the opening 2111 of the shell body 211 is located corresponds to the wall with the largest area of the battery cell 20, so as to facilitate the entry of the electrode assembly 22 into the shell body 211 via the opening 2111 of the shell body 211, thereby increasing the mounting speed of the battery cell 20.

For ease of explanation, the present application is mainly described by taking an example where the shell 21 is an approximately rectangular parallelepiped as shown in FIGs. 3 to 9. In addition, the shell body 211 is of a hollow structure with one end open. Correspondingly, the cover plate 212 is configured to cover the opening 2111 of the shell body 211. For example, the sealing connection between the shell body 211 and the cover plate 212 may be achieved by welding to form an enclosed chamber for placement of the electrode assembly 22, thereby improving the sealing reliability.

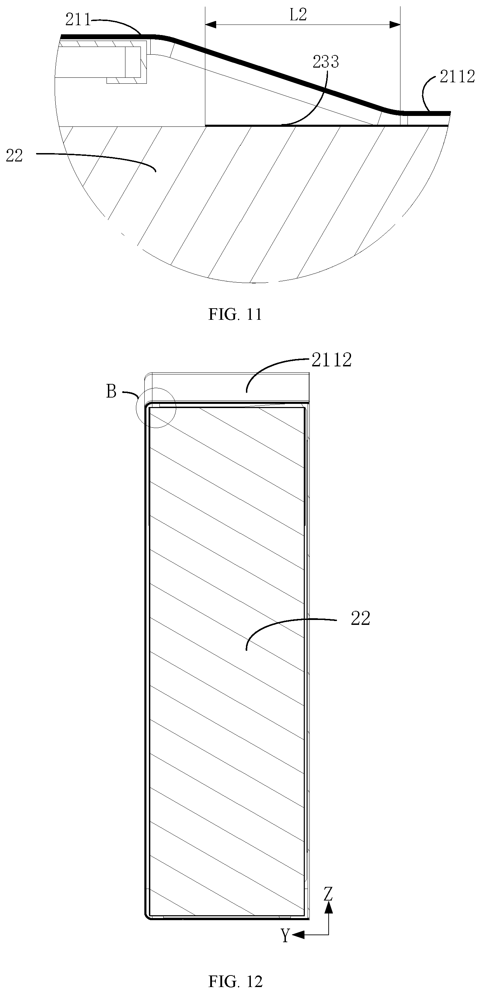

FIG. 10 shows a schematic cross-sectional view of a battery cell 20 according to the embodiments of the present application. The cross-sectional view shown in FIG. 10 may be the schematic cross-sectional view of the battery cell 20 shown in FIGs. 3 and 4, and the cross-section shown in FIG. 10 is perpendicular to the thickness direction Y of the battery cell 20. FIG. 11 shows another partial schematic cross-sectional view of a battery cell 20 according to the embodiments of the present application. The cross-sectional view shown in FIG. 11 is a partially enlarged view of region A in the cross-sectional view shown in FIG. 10.

In some embodiments, as shown in FIGs. 10 and 11, the shell body 211 is provided with a recess 2112 that is recessed toward the interior of the battery cell, such that the shell body 211 is better adapted to the shape of the electrode assembly 22, thereby further reducing the volume of the battery cell 20. The recess 2112 of the shell body 211 may be configured to place other components in the case 11 of the battery 10, so as to improve the internal space utilization rate of the case 11 of the battery 10.

Further, compared with other regions of the shell body 211, the recess 2112 of the shell body 211 is relatively close to the electrode assembly 22. A third region 233 of the insulating component 23 may be configured to be located between the recess 2112 and the electrode assembly 22; that is, the third region 233 of the insulating component 23 is provided between the recess 2112 and the electrode assembly 22, so as to achieve electrical insulation between the recess 2112 and the electrode assembly 22 and reduce the risk of a short circuit therebetween. For example, the first insulating structure 231 may include the third region 233, or the second insulating structure 232 may include the third region 233. The embodiments of the present application are not limited thereto.

In some embodiments, the orthographic projection of the bottom wall of the recess 2112 onto the third region 233 is located within the third region 233; that is, the dimension of the orthographic projection of the bottom wall of the recess 2112 onto the third region 233 is less than the dimension of the third region 233. For example, taking the length direction X of the battery cell 20 as an example, the difference between the dimension of the orthographic projection of the bottom wall of the recess 2112 onto the third region 233 and the dimension of the third region 233 may be L2, and L2 is greater than zero, so as to reduce the risk of insulation failure between the bottom wall of the recess 2112 and the electrode assembly 22 and improve the reliability.

In some embodiments, the first end surface 223 of the electrode assembly 22 is provided with two tabs 222, and the recess 2112 is located between the two tabs 222, such that the shell body 211 provided with the recess 2112 can be better adapted to the shape of the electrode assembly 22, thereby reducing unnecessary space inside the battery cell 20, improving the space utilization rate inside the battery cell 20, and meanwhile, improving the space utilization rate inside the case 11.

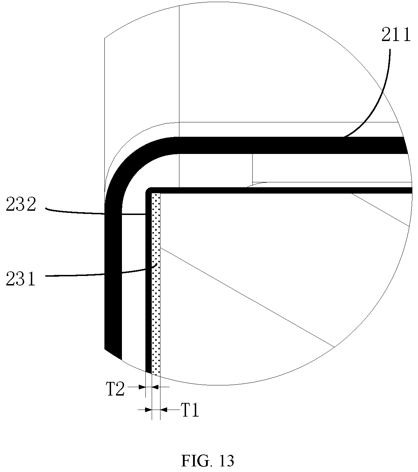

It should be understood that the dimension and material of the insulating component 23 according to the embodiments of the present application may be flexibly configured based on practical applications. FIG. 12 shows a schematic cross-sectional view of a battery cell 20 according to the embodiments of the present application. For example, the cross-sectional view shown in FIG. 12 may be the schematic cross-sectional view of the battery cell 20 shown in FIGs. 3 and 4, and the cross-section shown in FIG. 12 is perpendicular to the length direction Y of the battery cell 20. FIG. 13 shows another partial schematic cross-sectional view of a battery cell 20 according to the embodiments of the present application. The cross-sectional view shown in FIG. 13 is a partially enlarged view of region B in the cross-sectional view shown in FIG. 12.

In some embodiments, as shown in FIGs. 12 and 13, the thickness T1 of the first insulating structure 231 may be set based on practical applications. Similarly, the thickness T2 of the second insulating structure 232 may also be set based on practical applications. In addition, the thickness T1 of the first insulating structure 231 may be the same as or different from the thickness T2 of the second insulating structure 232. For example, the thickness T1 of the first insulating structure 231 may be different from the thickness T2 of the second insulating structure 232 to meet different requirements.

In some embodiments, the value range of the thickness T1 of the first insulating structure 231 is [0.03 mm, 0.3 mm]; and/or the value range of the thickness T2 of the second insulating structure 232 is [0.03 mm, 0.3 mm]. The thickness T1 of the first insulating structure 231 and the thickness T2 of the second insulating structure 232 should not be set too large, so as to reduce the space occupied by the insulating component 23. Conversely, the thickness T1 of the first insulating structure 231 and the thickness T2 of the second insulating structure 232 should not be set too small, so as to meet the insulation requirement and reduce the risk of local insulation failure. For example, the thickness T1 of the first insulating structure 231 may be specifically set to be 0.03 mm, 0.05 mm, 0.08 mm, 0.1 mm, 0.13 mm, 0.15 mm, 0.18 mm, 0.2 mm, 0.23 mm, 0.25 mm, 0.28 mm, or 0.3 mm; or the thickness T1 of the first insulating structure 231 may also be set to be a value between any two of the above numerical values. Similarly, the thickness T2 of the second insulating structure 232 may also be specifically set to be 0.03 mm, 0.05 mm, 0.08 mm, 0.1 mm, 0.13 mm, 0.15 mm, 0.18 mm, 0.2 mm, 0.23 mm, 0.25 mm, 0.28 mm, or 0.3 mm, or set to be a value between any two of the above numerical values.

In some embodiments, the material of the first insulating structure 231 according to the embodiments of the present application may be configured based on practical applications. Similarly, the material of the second insulating structure 232 may also be configured based on practical applications. In addition, the material of the first insulating structure 231 may be the same as or different from the material of the second insulating structure 232. For example, the material of the first insulating structure 231 may be different from the material of the second insulating structure 232 to meet different requirements. For example, the material of the first insulating structure 231 and/or the material of the second insulating structure 232 may include polypropylene (PP) and/or polyethylene (PE).

According to some embodiments of the present application, the present application further provides a battery 10. The battery includes the battery cell 20 according to any one of the above solutions.

According to some embodiments of the present application, the present application further provides an electric device. The electric device includes the battery 10 according to any one of the above solutions, and the battery 10 is configured to provide electric energy for the electric device.

The electric device may be any one of the aforementioned devices or systems that use the battery.

According to some embodiments of the present application, referring to FIGs. 3 to 8, the present application provides a battery cell 20. The battery cell 20 includes an electrode assembly 22 and an insulating component 23, and the insulating component 23 is configured to wrap at least a partial region of the electrode assembly 22. The insulating component 23 includes a first insulating structure 231 and a second insulating structure 232. The first insulating structure 231 is a hollow structure with one end open, and the hollow structure is configured to accommodate the electrode assembly 22. The second insulating structure 232 is configured to cover an opening 2311 of the first insulating structure 231. The electrode assembly 22 is provided with a tab 222, and the insulating component 23 is configured to wrap regions of the electrode assembly 22 other than the tab 222. In some embodiments, the tab 222 is disposed on a first end surface 223 of the electrode assembly 22, the first insulating structure 231 is configured to wrap regions of the electrode assembly 22 other than the first end surface 223, and the second insulating structure 232 is configured to wrap at least a partial region of the first end surface 223 other than the tab 222. The first end surface 223 is provided with two tabs 222, and the second insulating structure 232 is located between the two tabs 222. In some embodiments, the tab 222 is disposed on the first end surface 223 of the electrode assembly 22, the second insulating structure 232 is configured to wrap a second end surface 224 of the electrode assembly 22, and the first end surface 223 is different from the second end surface 224. The first end surface 223 and the second end surface 224 are disposed opposite to each other. The second insulating structure 232 includes a first region 2321 and two second regions 2322. The first region 2321 is located between the two second regions 2322. The first region 2321 is configured to cover at least a partial region of the opening 2311 of the first insulating structure 231, and the two second regions 2322 overlap with side walls of the first insulating structure 231 that are disposed opposite to each other, respectively.

The battery cell 20 further includes: a shell body 211, the shell body 211 being of a hollow structure with an opening 2111, and the electrode assembly 22 wrapped with the insulating component 23 being accommodated in the shell body 211; and a cover plate 212, the cover plate 212 being configured to cover the opening 2111 of the shell body 211. The shell body 211 is provided with a recess 2112 that is recessed toward the interior of the battery cell. A third region 233 of the insulating component 23 is located between the recess 2112 and the electrode assembly 22, and the orthographic projection of the bottom wall of the recess 2112 onto the third region 233 is located within the third region 233. The first end surface 223 of the electrode assembly 22 is provided with two tabs 222, and the recess 2112 is located between the two tabs 222. The cover plate 212 includes a wall with the largest area of the battery cell.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell, comprising:
an electrode assembly (22); and
an insulating component (23), wherein the insulating component (23) is configured to wrap at least a partial region of the electrode assembly (22); the insulating component (23) comprises a first insulating structure (231) and a second insulating structure (232), the first insulating structure (231) is a hollow structure with one end open, the hollow structure being configured to accommodate the electrode assembly (22), and the second insulating structure (232) is configured to cover an opening (2311) of the first insulating structure (231).

2. The battery cell according to claim 1, wherein the electrode assembly (22) is provided with a tab (222), and the insulating component (23) is configured to wrap regions of the electrode assembly (22) other than the tab (222).

3. The battery cell according to claim 2, wherein the tab (222) is disposed on a first end surface (223) of the electrode assembly (22), the first insulating structure (231) is configured to wrap regions of the electrode assembly (22) other than the first end surface (223), and the second insulating structure (232) is configured to wrap at least a partial region of the first end surface (223) other than the tab (222).

4. The battery cell according to claim 3, wherein the first end surface (223) is provided with two tabs (222), and the second insulating structure (232) is located between the two tabs (222).

5. The battery cell according to claim 2, wherein the tab (222) is disposed on a first end surface (223) of the electrode assembly (22), the second insulating structure (232) is configured to wrap a second end surface (224) of the electrode assembly (22), and the first end surface (223) is different from the second end surface (224).

6. The battery cell according to claim 5, wherein the first end surface (223) and the second end surface (224) are disposed opposite to each other.

7. The battery cell according to claim 5 or 6, wherein the first insulating structure (231) is provided with a clearance opening (2312), and the clearance opening (2312) is configured to provide clearance for the tab (222).

8. The battery cell according to any one of claims 1 to 7, wherein the second insulating structure (232) comprises a first region (2321) and two second regions (2322), the first region (2321) is located between the two second regions (2322), the first region (2321) is configured to cover at least a partial region of the opening (2311) of the first insulating structure (231), and the two second regions (2322) overlap with side walls of the first insulating structure (231) that are disposed opposite to each other, respectively.

9. The battery cell according to claim 8, wherein a dimension of each second region (2322) of the two second regions (2322) in a thickness direction of the first region (2321) is greater than or equal to 0.5 mm.

10. The battery cell according to any one of claims 1 to 9, wherein the battery cell comprises:
a shell body (211), the shell body (211) being of a hollow structure with an opening (2111), and the electrode assembly (22) wrapped with the insulating component (23) being accommodated in the shell body (211); and
a cover plate (212), the cover plate (212) being configured to cover the opening (2111) of the shell body (211).

11. The battery cell according to claim 10, wherein the shell body (211) is provided with a recess (2112) that is recessed toward an interior of the battery cell, a third region (233) of the insulating component (23) is located between the recess (2112) and the electrode assembly (22), and an orthographic projection of a bottom wall of the recess (2112) onto the third region (233) is located within the third region (233).

12. The battery cell according to claim 11, wherein the first end surface (223) of the electrode assembly (22) is provided with two tabs (222), and the recess (2112) is located between the two tabs (222).

13. The battery cell according to any one of claims 10 to 12, wherein the cover plate (212) comprises a wall with a largest area of the battery cell.

14. The battery cell according to any one of claims 1 to 13, wherein a value range of a thickness of the first insulating structure (231) is [0.03 mm, 0.3 mm]; and/or
a value range of a thickness of the second insulating structure (232) is [0.03 mm, 0.3 mm].

15. The battery cell according to any one of claims 1 to 14, wherein the second insulating structure (232) is an adhesive tape.

16. A battery, comprising:
a plurality of battery cells, wherein the battery cell is the battery cell according to any one of claims 1 to 15.

17. An electric device, comprising:
a battery, wherein the battery comprises a plurality of battery cells, the battery cell being the battery cell according to any one of claims 1 to 15, and the battery is configured to supply power to the electric device.
